# EUROPEAN PATENT APPLICATION

(11) **EP 4 664 450 A1**
(43) Date of publication of application: **17.12.2025**
(21) Application number: 24201092.4
(22) Date of filing: 18.09.2024
(51) Int. Cl.: G10L 15/183, G06F 16/738, G10L 15/26

(54) **METHOD AND APPARATUS FOR TRANSCRIBING AUDIO**

(30) Priority: 21.06.2024 CN 202410813620
(71) Applicant: Beijing Baidu Netcom Science Technology Co., Ltd., Beijing 100085 (CN)
(72) Inventor: ZOU, Hongtao, Beijing, 100085 (CN); CHEN, Si, Beijing, 100085 (CN)
(74) Representative: Lucke, Andreas

(57) **Abstract**

The present disclosure provides a method and apparatus for transcribing audio, relates to the field of artificial intelligence technology, in particular to the fields of natural language processing and deep learning technology. A specific embodiment of the method includes: receiving audio information uploaded through a scenario entry of a storage service application installed on a client; determining, based on the scenario entry, a scenario type of the audio information; performing speech recognition on the audio information to obtain text information corresponding to the audio information; and inputting the text information and a prompt corresponding to the scenario type into a language model to obtain summary information, where the language model is obtained by performing supervised fine-tuning on a pre-trained model using samples corresponding to various scenario types, and the prompts corresponding to the various scenario types are obtained by tuning initial prompts corresponding to the various scenario types using the language model. An output effect of the language model of this embodiment is more in line with needs of users in various scenario types.

## Description

### TECHNICAL FIELD

The present disclosure relates to the field of artificial intelligence technology, in particular to the fields of natural language processing and deep learning technology.

### BACKGROUND

In the technical field of intelligent speech transcription, there are several mature speech transcription products on the market. They provide users with high-quality speech transcription services through different product designs. These products mainly rely on deep learning algorithms and speech recognition technology, are able to convert speech content into text in real time or offline, and support multiple languages and dialects.

Currently, highlights of such products focus on the following three aspects: first, the accuracy and efficiency of transcription is improved through advanced acoustic model and language model optimization; secondly, file-based text generation is achieved through the addition of semantic comprehension and the function of natural language processing; and thirdly, multi-scenario adaptability is provided during the transcription to meet the transcription needs of different users.

### SUMMARY

Embodiments of the present disclosure propose a method and apparatus for transcribing audio, a device, a storage medium and a program product.

In a first aspect, embodiments of the present disclosure propose a method for training a language model, including: acquiring a first sample corresponding to a scenario type, where the first sample includes first sample text information and first sample summary information; inputting the first sample text information into a pre-trained model to obtain first prediction summary information; calculating a first loss based on the first sample summary information and the first prediction summary information; and adjusting parameters of the pre-trained model based on the first loss to obtain the language model.

In a second aspect, embodiments of the present disclosure propose a method for transcribing audio, including: receiving audio information uploaded through a scenario entry of a storage service application installed on a client; determining, based on the scenario entry, a scenario type of the audio information; performing speech recognition on the audio information to obtain text information corresponding to the audio information; and inputting the text information and a prompt corresponding to the scenario type into a language model to obtain summary information, where the language model is obtained by performing supervised fine-tuning on a pre-trained model using samples corresponding to various scenario types, and the prompts corresponding to the various scenario types are obtained by tuning initial prompts corresponding to the various scenario types using the language model.

In a third aspect, embodiments of the present disclosure propose an apparatus for training a language model, comprising: a first acquisition module, configured to acquire a first sample corresponding to a scenario type, wherein the first sample comprises first sample text information and first sample summary information; a first prediction module, configured to input the first sample text information into a pre-trained model to obtain first prediction summary information; a first calculation module, configured to calculate a first loss based on the first sample summary information and the first prediction summary information; and a first adjustment module, configured to adjust parameters of the pre-trained model based on the first loss to obtain the language model.

In a fourth aspect, embodiments of the present disclosure propose an apparatus for transcribing audio, comprising: an audio receiving module, configured to receive audio information uploaded through a scenario entry of a storage service application installed on a client; a scenario determination module, configured to determine, based on the scenario entry, a scenario type of the audio information; a speech recognition module, configured to perform speech recognition on the audio information to obtain text information corresponding to the audio information; and a text summarization module, configured to input the text information and a prompt corresponding to the scenario type into a language model to obtain summary information, wherein the language model is obtained by performing supervised fine-tuning on a pre-trained model using samples corresponding to various scenario types, and the prompts corresponding to the various scenario types are obtained by tuning initial prompts corresponding to the various scenario types using the language model.

In a fifth aspect, embodiments of the present disclosure propose an electronic device, comprising: one or more processors; and a memory, storing one or more programs, wherein the one or more programs, when executed by the one or more processors, cause the one or more processors to implement the method provided by the first aspect or the second aspect.

In a sixth aspect, embodiments of the present disclosure propose a computer-readable medium, storing a computer program thereon, wherein the program, when executed by a processor, causes the processor to implement the method provided by the first aspect or the second aspect.

In a seventh aspect, embodiments of the present disclosure propose a computer program product, comprising a computer program, wherein the computer program, when executed by a processor, implements the method provided by the first aspect or the second aspect.

Embodiments of the present disclosure provide a method for transcribing audio, adopting a cloud storage solution. The method fully realizes a full-link closed loop from audio production to audio transcription to audio intelligent summarization within a storage service application, does not occupy a user's local storage space, and reduces the user's storage pressure. Through various scenario entries, more eye-catching guidance is provided for users with clear demands, and the creation and categorization management of target scenario-based recording may be performed quickly. Prompted by a prompt corresponding to a scenario type, a language model may output highly personalized, highly finished and highly accurate intelligent summaries based on the scenario type of audio information, so that an output effect of the language model is more in line with needs of users in various scenario types.

It should be understood that the content described in this part is not intended to identify key or important features of embodiments of the present disclosure, and is not used to limit the scope of the present disclosure. Other features of the present disclosure will be easily understood through the following description.

### BRIEF DESCRIPTION OF THE DRAWINGS

Other features, objectives and advantages of the present disclosure will become more apparent, by reading detailed description of non-limiting embodiments with reference to the following accompanying drawings. The accompanying drawings are used for a better understanding of the present solution, and do not constitute a limitation of the present disclosure. In which:
FIG. 1 is a flowchart of an embodiment of a method for training a language model according to the present disclosure;
FIG. 2 is a flowchart of an embodiment of a method for transcribing audio according to the present disclosure;
FIG. 3 is an interface diagram for audio import on a mobile terminal;
FIG. 4 is an interface diagram for audio import on a computer terminal;
FIG. 5 is an interface diagram for creating records management on a mobile terminal;
FIG. 6 is an interface diagram for creating records management on a computer terminal;
FIG. 7 is a schematic structural diagram of an embodiment of an apparatus for training a language model according to the present disclosure;
FIG. 8 is a schematic structural diagram of an embodiment of an apparatus for transcribing audio according to the present disclosure; and
FIG. 9 is a block diagram of an electronic device used to implement the method for transcribing audio according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skilled in the art that various changes and modifications may be made to the embodiments described herein without departing from the scope and spirit of the present disclosure. Also, for clarity and conciseness, descriptions for well-known functions and structures are omitted in the following description.

It is noted that the embodiments in the present disclosure and the features in the embodiments may be combined with each other without conflict. The present disclosure will now be described in detail with reference to the accompanying drawings and examples.

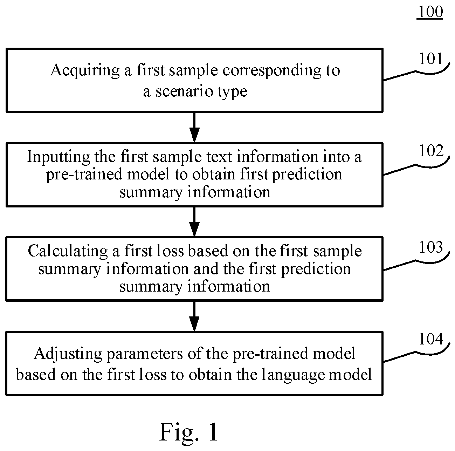

FIG. 1 illustrates a flow 100 of an embodiment of a method for training a language model according to the present disclosure. The method for training a language model includes the following steps:
Step 101, acquiring a first sample corresponding to a scenario type.

In the present embodiment, an executing body of the method for training a language model may acquire the first sample corresponding to the scenario type.

The executing body of the method for training a language model is usually a server. The server may be hardware or software. When the server is hardware, it may be implemented as a distributed server cluster composed of a plurality of servers, or as a single server. When the server is software, it may be implemented as a plurality of software or software modules (e.g., for providing distributed services), or as a single software or software module, which is not limited herein.

Typically, collecting a large number of audio information recorded by a user in various application scenarios can obtain the first samples corresponding to the various application scenarios through processing. Here, the scenario type may be a type of scenario in which the user is recording the audio. The scenario type may include, but is not limited to: classroom recording, telephone recording, interview recording, or the like. The first sample may include first sample text information and first sample summary information. The first sample text information may be text information obtained by performing speech recognition on the audio information. The first sample summary information may be text information obtained by summarizing content of the first sample text information. For example, by inputting the first sample text information into another language model, the first sample summary information may be obtained. As another example, those skilled in the art may manually summarize the first sample text information to obtain the first sample summary information.

Step 102, inputting the first sample text information into a pre-trained model to obtain first prediction summary information.

In the present embodiment, the executing body may input the first sample text information into the pre-trained model to obtain the first prediction summary information.

The pre-trained model may be a model that has already been trained using a sample set, and has a generic intelligent summarization capability. The pre-trained model cannot distinguish the scenario type of the first sample text information, and may perform generic intelligent summarization on the first sample text information to obtain the first prediction summary information.

Typically, collecting a large number of audio information recorded by the user can obtain the sample set through processing. Here, samples in the sample set may include sample text information and sample summary information. The sample text information may be text information obtained by performing speech recognition on the audio information. The sample summary information may be text information obtained by summarizing content of the sample text information. By inputting the sample text information into the model, prediction summary information may be obtained. Based on the sample summary information and the prediction summary information, a loss may be calculated. By adjusting parameters of the model based on the loss, the pre-trained model may be obtained.

Step 103, calculating a first loss based on the first sample summary information and the first prediction summary information.

In the present embodiment, the executing body may calculate the first loss based on the first sample summary information and the first prediction summary information.

Here, a suitable loss function may be selected. By inputting the first sample summary information and the first prediction summary information into the loss function, the first loss may be obtained from calculation. The first loss may be used to represent a difference between the first sample summary information and the first prediction summary information. The smaller the difference, the stronger the pre-trained model's intelligent summarization capability for different scenario types; the larger the difference, the weaker the pre-trained model's intelligent summarization capability for different scenario types.

Step 104, adjusting parameters of the pre-trained model based on the first loss to obtain the language model.

In the present embodiment, the executing body may adjust the parameters of the pre-trained model based on the first loss to obtain the language model.

The parameters of the pre-trained model may be continuously and iteratively updated during the training until the loss is small enough and the model converges, i.e., may obtain the language model. The language model may have the intelligent summarization capability for different application scenarios.

In some embodiments, in order to ensure the accuracy and reliability of intelligent summarization of the language model for different application scenarios, the language model may be tested and tuned. Specific steps are as follows:

First, acquiring a second sample corresponding to the scenario type.

Typically, collecting a large number of audio information recorded by the user in various application scenarios can obtain the second samples corresponding to the various application scenarios through processing. Here, the second sample may include second sample text information and second sample summary information. The second sample text information may be text information obtained by performing speech recognition on the audio information. The second sample summary information may be text information obtained by summarizing content of the second sample text information.

Next, inputting the second sample text information into the language model to obtain second prediction summary information.

Then, calculating an accuracy of the language model, based on the second sample summary information and the second prediction summary information.

Typically, if a difference between the second prediction summary information and the second sample summary information is small, it may be considered that summarization of the language model is accurate. If the difference between the second prediction summary information and the second sample summary information is large, it may be considered that summarization of the language model is inaccurate. Here, the accuracy of the language model may be obtained by dividing the number of accurate summaries using the language model by a total number of language model summaries.

Finally, determining whether the accuracy of the language model is less than a preset accuracy threshold. If the accuracy is not less than the preset accuracy threshold, it may be determined that the language model passes a test. If the accuracy is less than the preset accuracy threshold, a second loss may be calculated based on the second sample summary information and the second prediction summary information. Parameters of the language model may be adjusted based on the second loss.

In some embodiments, tuned prompts may enable the language model to output highly personalized, highly finished and highly accurate intelligent summaries based on the scenario type of the audio information. An output effect of intelligent summarization of the language model is more in line with needs of users in various scenario types. Tuning steps of the prompts may be as follows:

First, acquiring an initial prompt and a third sample corresponding to the scenario type.

Here, the initial prompts corresponding to the various scenario types may be different instructions initially designed by those skilled in the art for the scenarios.

Typically, collecting a large number of audio information recorded by the user in various application scenarios can obtain the third samples corresponding to the various application scenarios through processing. The third sample may include third sample text information and third sample summary information. The third sample text information may be text information obtained by performing speech recognition on the audio information. The third sample summary information may be text information obtained by summarizing content of the third sample text information.

Then, inputting the third sample text information and the initial prompt into the language model to obtain third prediction summary information.

Typically, the third sample text information and the initial prompt are uniformly input into the language model according to a pre-specified format. The language model may perform intelligent summarization on the third sample text information prompted by the initial prompt to obtain the third prediction summary information.

Finally, tuning the initial prompt based on a difference between the third sample summary information and the third prediction summary information, to obtain a prompt corresponding to the scenario type.

Typically, if the difference between the third sample summary information and the third prediction summary information is small, it may be considered that an output result of the language model is as expected and may be used as the prompt corresponding to the scenario type. If the difference between the third sample summary information and the third prediction summary information is large, it may be considered that the output result of the language model is not as expected. In this regard, those skilled in the art may tune the initial prompt based on the output effect of the language model until the output result of the language model is as expected and the prompt corresponding to the scenario type is obtained.

An embodiment of the present disclosure provides a method for training a language model, by performing supervised fine-tuning on the pre-trained model using the first samples corresponding to various scenario types, the language model is obtained, which improves the intelligent summarization capability of the language model for various scenario types.

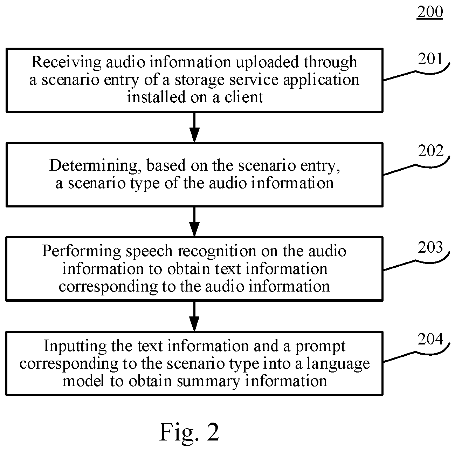

With further reference to FIG. 2, illustrating a flow 200 of an embodiment of a method for transcribing audio according to the present disclosure. The method for transcribing audio includes the following steps:

Step 201, receiving audio information uploaded through a scenario entry of a storage service application installed on a client.

In the present embodiment, an executing body of the method for transcribing audio may receive the audio information uploaded through the scenario entry of the storage service application installed on the client.

The executing body of the method for transcribing audio is usually a server of the storage service application. The storage service application may be an application that provides a storage service, such as a web drive or a cloud drive. The server may be hardware or software. When the server is hardware, it may be implemented as a distributed server cluster composed of a plurality of servers, or as a single server. When the server is software, it may be implemented as a plurality of software or software modules (e.g., for providing distributed services), or as a single software or software module, which is not limited herein.

The storage service application is installed on the client of a user. The user may access a homepage of the storage service application by clicking on an icon of the storage service application. Various scenario entries may be displayed on the homepage, which can provide more eye-catching guidance for users with clear demands. The scenario entry may include, but is not limited to a classroom recording entry, a telephone recording entry, an interview recording entry, or the like. Through the scenario entry, the user may distinguish the scenario and upload the audio information correspondingly. For example, the audio information recorded by the user in a classroom recording scenario may be uploaded through the classroom recording entry. As another example, the audio information recorded by the user in a telephone recording scenario may be uploaded through the telephone recording entry. As yet another example, the audio information recorded by the user in an interview recording scenario may be uploaded through the interview recording entry.

In some embodiments, the scenario entry may support both the import of local audio and the upload of real-time recordings, with a wider range of application scenarios. In particular, the scenario entry may include a scenario import entry and a scenario recording entry. Here, the scenario import entry may be used to upload locally stored audio information on the client. The scenario recording entry may be used to upload audio information recorded in real time on the client, and the audio information is deleted from the client after the upload is completed. Through the scenario recording entry, the user may directly implement a real-time recording function within the storage service application, and the recorded audio information is directly stored in the cloud of the storage service application. An online audio production flow will not rely on additional recording software and will not occupy the user's local storage space.

It should be noted that a generic entry may also be displayed on the homepage of the storage service application. For users who cannot distinguish their scenarios, they may upload audio information through the generic entry. The generic entry may likewise support both the import of local audio and the upload of real-time recordings. In particular, the generic entry may include a generic import entry and a generic recording entry. Here, the generic import entry may be used to upload locally stored audio information on the client. The generic recording entry may be used to upload audio information recorded in real time on the client, and the audio information is deleted from the client after the upload is completed.

Step 202, determining, based on the scenario entry, a scenario type of the audio information.

In the present embodiment, the executing body may determine, based on the scenario entry, the scenario type of the audio information.

The scenario entry may correspond one-to-one with the scenario type. Therefore, based on the scenario entry selected by the user when uploading the audio, the audio information may be automatically categorized. Here, the scenario type may be a type of scenario in which the user is recording the audio. The scenario type may include, but is not limited to: classroom recording, telephone recording, interview recording, or the like. For example, if the user uploads the audio information through a classroom recording scenario entry, it may be determined that the scenario type of the audio information is classroom recording. As another example, if the user uploads the audio information through a telephone recording scenario entry, it may be determined that the scenario type of the audio information is telephone recording. As yet another example, if the user uploads the audio information through an interview recording scenario entry, it may be determined that the scenario type of the audio information is interview recording.

Step 203, performing speech recognition on the audio information to obtain text information corresponding to the audio information.

In the present embodiment, the executing body may perform speech recognition on the audio information to obtain the text information corresponding to the audio information.

Step 204, inputting the text information and a prompt corresponding to the scenario type into a language model to obtain summary information.

In the present embodiment, the executing body may input the text information and the prompt corresponding to the scenario type into the language model to obtain the summary information.

Prompted by the prompt corresponding to the scenario type, the language model may output highly personalized, highly finished and highly accurate intelligent summaries based on the scenario type of the audio information, so that an output effect of the language model is more in line with needs of users in various scenario types. Moreover, an intelligent summarization module may be provided for audio information of different scenario types to targeted meet the user's personalized use demands, which can bring the smoothest and most practical experience to the user.

The language model is obtained by performing supervised fine-tuning on a pre-trained model using samples corresponding to various scenario types. The prompts corresponding to the various scenario types are obtained by tuning initial prompts corresponding to the various scenario types using the language model. The training process of the language model and the tuning process of the prompts may be referred to the embodiment shown in FIG. 1, detailed description thereof will be omitted.

In some embodiments, based on the scenario type determined by the scenario import entry, a personalized intelligent summarization module may be provided on the client for the user's unique scenario-based demands, ensuring the relevance and completeness of intelligent summaries output from the language model.

In the case where the scenario type is classroom recording, the prompt may be subdivided by way of ingenious re-segmentation of the audio information of the classroom recording, which ensures that efficient and complete abstracts, segmented summaries, and knowledge points can be output in all kinds of subdivided categories, thus improving the efficiency and accuracy of text abstract generation. Specific steps may be as follows:

First, categorizing the text information based on the prompt corresponding to the classroom recording to obtain a category of the text information.

Here, the category may include, but is not limited to: a language learning category, a test-taking learning category, a pan-learning category, or the like.

Then, summarizing the text information according to the category using the language model to obtain the summary information.

In the case where the scenario type is telephone recording or interview recording, the prompt may be abstracted into the form of dialogue for efficient comprehension while ensuring the comprehension of content points in the audio information of the telephone recording or the interview recording. The most important dialogue link is filtered by using the level of information density in each segment of dialogue. In this way, an abstract, segmented summaries, and problem review optimized for the scenario are given to help the user efficiently understand the content of the audio information recorded in the telephone recalling or the interview recording. Specific steps may be as follows:

First, abstracting the text information into dialogue text information based on the prompt corresponding to the telephone recording or the interview recording.

Then, summarizing the dialogue text information using the language model to obtain the summary information.

In some embodiments, the storage service application may allow for simultaneous audio production, storage and management capabilities. An entire flow of data and files from audio recording to audio transcription to audio intelligent summarization is stored and traced within the storage service application without occupying the user's local storage space. In addition, with the powerful file management and editing capabilities within the storage service application, the user may manage, revisit, edit and re-create files generated throughout the entire flow within the storage service application, which greatly simplifies the user's management difficulties and optimizes flow experience. In terms of storage and management, the user may manage all the created audio recording on a service page of the storage service application. The audio recording may be filtered and managed based on the scenario type at the time of creation. At the same time, relying on the powerful file storage and organization capabilities of the storage service application, the user may synchronously organize and edit uploaded audio, exported manuscripts, and exported intelligent summaries in the storage service application, to ensure that a full-link closed loop is realized in the cloud. Specific steps may be as follows:

First, receiving a batch processing instruction based on the scenario type sent by a storage service application installed on the client.

Then, processing historical uploaded audio information corresponding to the scenario type, based on the batch processing instruction, where the processing may include but is not limited to: filtering the audio information, editing the audio information, exporting the text information corresponding to the audio information, or exporting the summary information corresponding to the audio information.

An embodiment of the present disclosure provides a method for transcribing audio, adopting a cloud storage solution, the method fully realizes a full-link closed loop from audio production to audio transcription to audio intelligent summarization within a storage service application, does not occupy a user's local storage space, and reduces the user's storage pressure. Through various scenario entries, more eye-catching guidance is provided for users with clear demands, and the creation and categorization management of target scenario-based recording may be performed quickly. Prompted by a prompt corresponding to a scenario type, a language model may output highly personalized, highly finished and highly accurate intelligent summaries based on the scenario type of audio information, so that an output effect of the language model is more in line with needs of users in various scenario types.

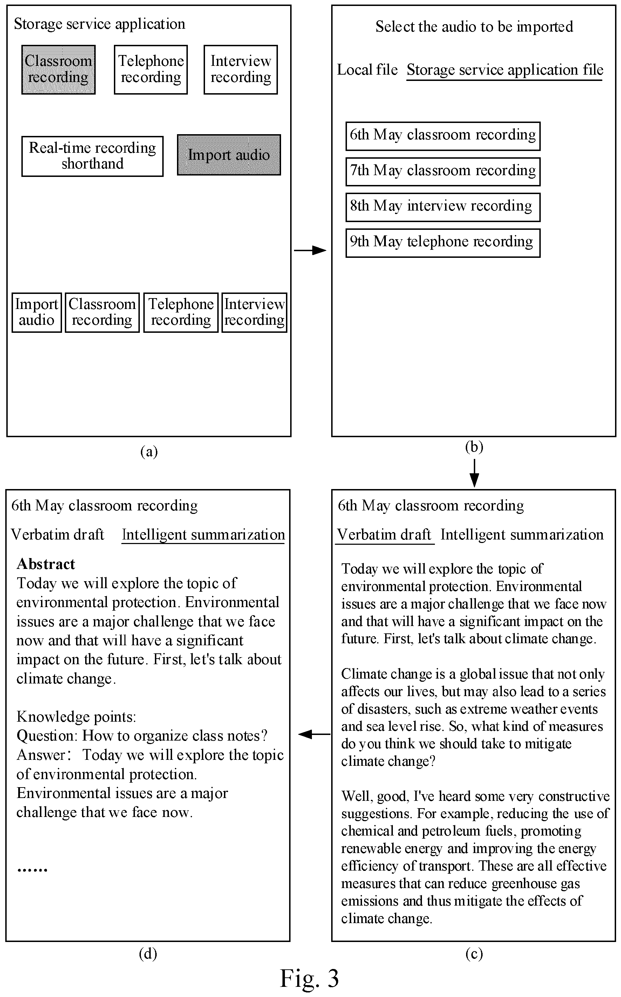

With further reference to FIG. 3, illustrating an interface diagram for audio import on a mobile terminal. As shown in FIG. 3(a), the homepage of a storage service application may have a classroom recording entry, a telephone recording entry, and an interview recording entry. When a user clicks on the classroom recording entry, a real-time recording shorthand button and an import audio button appear. As shown in FIG. 3(b), the user clicks on the import audio button and selects the audio "6th May classroom recording" to import. As shown in FIG. 3(c), the user clicks on a verbatim draft button to perform speech recognition on the audio "6th May classroom recording" to display corresponding text. As shown in FIG. 3(d), the user clicks on an intelligent summarization button, and a language model summarizes the text and displays summary information prompted by a prompt corresponding to the classroom recording.

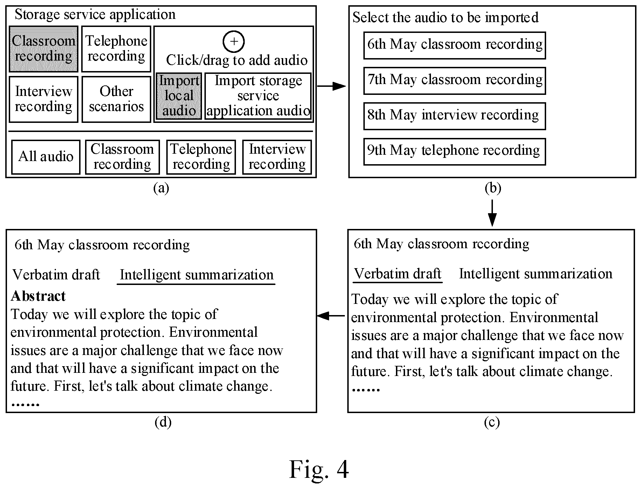

With further reference to FIG. 4, illustrating an interface diagram for audio import on a computer terminal. As shown in FIG. 4(a), the homepage of a storage service application may have a classroom recording entry, a telephone recording entry, an interview recording entry, and other scenario entries. When a user clicks on the classroom recording entry, an import local audio button and an import storage service application audio button appear. As shown in FIG. 4(b), the user clicks on the import local audio button and selects the audio "6th May classroom recording" to import. As shown in FIG. 4(c), the user clicks on a verbatim draft button to perform speech recognition on the audio "6th May classroom recording" to display corresponding text. As shown in FIG. 4(d), the user clicks on an intelligent summarization button, and a language model summarizes the text and displays summary information prompted by a prompt corresponding to the classroom recording.

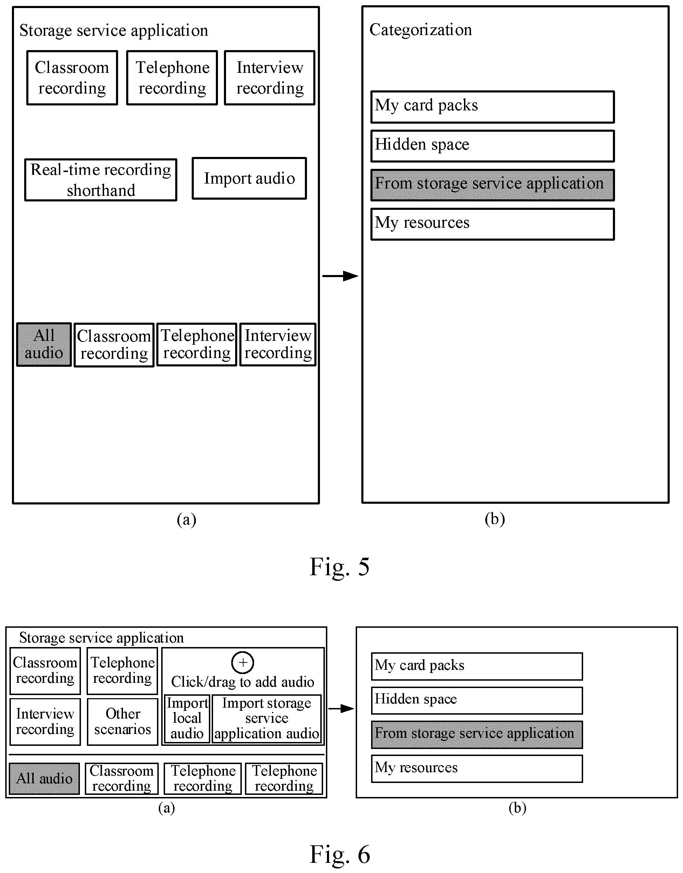

With further reference to FIG. 5, illustrating an interface diagram for creating records management on a mobile terminal. As shown in FIG. 5(a), there may be four records management buttons on the homepage of a storage service application, namely, all audio, classroom recording, telephone recording and interview recording. As shown in FIG. 5(b), when a user clicks on the all audio button, a folder "from storage service application" is generated from all audio uploaded by the user through a scenario entry of the storage service application. The user may manage all the audio in the folder "from storage service application".

With further reference to FIG. 6, illustrating an interface diagram for creating records management on a computer terminal. As shown in FIG. 6(a), there may be four records management buttons on the homepage of a storage service application, namely, all audio, classroom recording, telephone recording and interview recording. As shown in FIG. 6(b), when a user clicks on the all audio button, a folder "from storage service application" is generated from all audio uploaded by the user through a scenario entry of the storage service application. The user may manage all the audio in the folder "from storage service application".

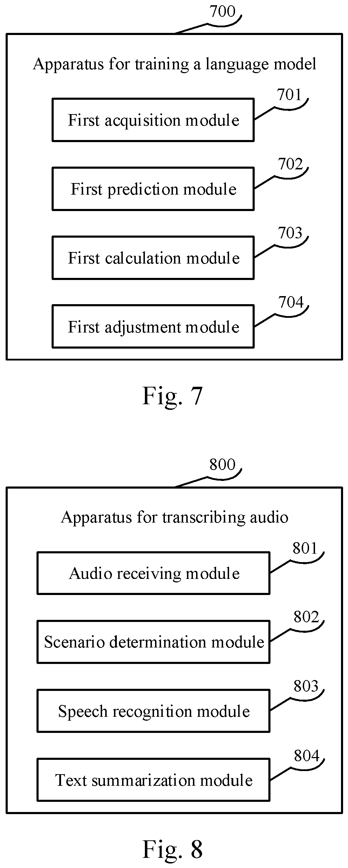

With further reference to FIG. 7, as an implementation of the method shown in the above figures, the present disclosure provides an embodiment of an apparatus for training a language model, and the apparatus embodiment corresponds to the method embodiment shown in FIG. 1, the apparatus may be applied to various electronic devices.

As shown in FIG. 7, an apparatus 700 for training a language model in the present embodiment may include: a first acquisition module 701, a first prediction module 702, a first calculation module 703 and a first adjustment module 704. Here, the first acquisition module 701 is configured to acquire a first sample corresponding to a scenario type, where the first sample includes first sample text information and first sample summary information; the first prediction module 702 is configured to input the first sample text information into a pre-trained model to obtain first prediction summary information; the first calculation module 703 is configured to calculate a first loss based on the first sample summary information and the first prediction summary information; and the first adjustment module 704 is configured to adjust parameters of the pre-trained model based on the first loss to obtain the language model.

In the present embodiment, in the apparatus 700 for training a language model: the specific processing and technical effects of the first acquisition module 701, the first prediction module 702, the first calculation module 703 and the first adjustment module 704 may be referred to the relevant descriptions of steps 101-104 in the corresponding embodiment of FIG. 1, respectively, detailed description thereof will be omitted.

In some alternative implementations of the present embodiment, the apparatus 700 for training a language model further includes: a second acquisition module, configured to acquire a second sample corresponding to the scenario type, where the second sample includes second sample text information and second sample summary information; a second prediction module, configured to input the second sample text information into the language model to obtain second prediction summary information; a second calculation module, configured to calculate an accuracy of the language model, based on the second sample summary information and the second prediction summary information; and a determination module, configured to determine, in response to the accuracy of the language model being not less than a preset accuracy threshold, that the language model passes a test.

In some alternative implementations of the present embodiment, the apparatus 700 for training a language model further includes: a third calculation module, configured to calculate a second loss, in response to the accuracy of the language model being less than the preset accuracy threshold, based on the second sample summary information and the second prediction summary information; and a second adjustment module, configured to adjust parameters of the language model based on the second loss.

In some alternative implementations of the present embodiment, the apparatus 700 for training a language model further includes: a third acquisition module, configured to acquire an initial prompt and a third sample corresponding to the scenario type, where the third sample includes third sample text information and third sample summary information; a third prediction module, configured to input various of the third sample text information and the initial prompt into the language model to obtain third prediction summary information; and a tuning module, configured to tune the initial prompt based on a difference between the third sample summary information and the third prediction summary information, to obtain a prompt corresponding to the scenario type.

In some alternative implementations of the present embodiment, the apparatus 700 for training a language model further includes: the scenario type includes at least one of: classroom recording, telephone recording, or interview recording.

With further reference to FIG. 8, as an implementation of the method shown in the above figures, the present disclosure provides an embodiment of an apparatus for transcribing audio, and the apparatus embodiment corresponds to the method embodiment shown in FIG. 2, the apparatus may be applied to various electronic devices.

As shown in FIG. 8, an apparatus 800 for transcribing audio in the present embodiment may include: a audio receiving module 801, a scenario determination module 802, a speech recognition module 803 and a text summarization module 804. Here, the audio receiving module 801 is configured to receive audio information uploaded through a scenario entry of a storage service application installed on a client; the scenario determination module 802 is configured to determine, based on the scenario entry, a scenario type of the audio information; the speech recognition module 803 is configured to perform speech recognition on the audio information to obtain text information corresponding to the audio information; and the text summarization module 804 is configured to input the text information and a prompt corresponding to the scenario type into a language model to obtain summary information, where the language model is obtained by performing supervised fine-tuning on a pre-trained model using samples corresponding to various scenario types, and the prompts corresponding to the various scenario types are obtained by tuning initial prompts corresponding to the various scenario types using the language model.

In the present embodiment, in the apparatus 800 for transcribing audio: the specific processing and technical effects of the audio receiving module 801, the scenario determination module 802, the speech recognition module 803 and the text summarization module 804 may be referred to the relevant descriptions of steps 201-204 in the corresponding embodiment of FIG. 2, respectively, detailed description thereof will be omitted.

In some alternative implementations of the present embodiment, the scenario type includes at least one of: classroom recording, telephone recording, or interview recording.

In some alternative implementations of the present embodiment, the scenario type is the classroom recording; and the text summarization module 804 is further configured to: categorize the text information based on the prompt corresponding to the classroom recording to obtain a category of the text information; and summarize the text information according to the category using the language model to obtain the summary information.

In some alternative implementations of the present embodiment, the category includes at least one of: a language learning category, a test-taking learning category, or a pan-learning category.

In some alternative implementations of the present embodiment, the scenario type is the telephone recording or the interview recording; and the text summarization module 804 is further configured to: abstract the text information into dialogue text information based on the prompt corresponding to the telephone recording or the interview recording; and summarize the dialogue text information using the language model to obtain the summary information.

In some alternative implementations of the present embodiment, the scenario entry includes a scenario import entry, for uploading the audio information locally stored on the client.

In some alternative implementations of the present embodiment, the scenario entry includes a scenario recording entry, for uploading the audio information recorded in real time by the client, and the audio information is deleted from the client upon completion of the uploading.

In some alternative implementations of the present embodiment, the apparatus 800 for transcribing audio further includes: an instruction receiving module, configured to receive a batch processing instruction based on the scenario type sent by a storage service application installed on the client; and a batch processing module, configured to process historical uploaded audio information corresponding to the scenario type, based on the batch processing instruction, where the processing includes at least one of: filtering the audio information, editing the audio information, exporting the text information corresponding to the audio information, or exporting the summary information corresponding to the audio information.

In the technical solution of the present disclosure, the acquisition, storage and application of personal information of a user involved are in conformity with relevant laws and regulations, and do not violate public order and good customs.

According to an embodiment of the present disclosure, the present disclosure further provides an electronic device, a readable storage medium, and a computer program product.

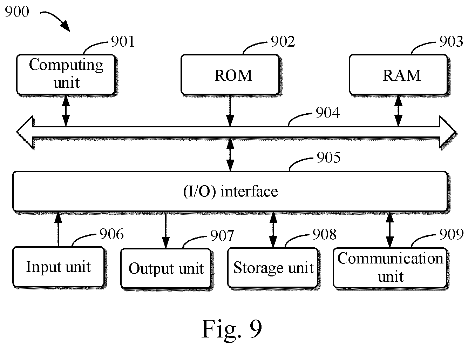

FIG. 9 shows a schematic block diagram of an example electronic device 900 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 9, the device 900 includes a computation unit 901, which may perform various appropriate actions and processing, based on a computer program stored in a read-only memory (ROM) 902 or a computer program loaded from a storage unit 908 into a random access memory (RAM) 903. In the RAM 903, various programs and data required for the operation of the device 900 may also be stored. The computation unit 901, the ROM 902, and the RAM 903 are connected to each other through a bus 904. An input/output (I/O) interface 905 is also connected to the bus 904.

A plurality of components in the device 900 are connected to the I/O interface 905, including: an input unit 906, for example, a keyboard and a mouse; an output unit 907, for example, various types of displays and speakers; the storage unit 908, for example, a disk and an optical disk; and a communication unit 909, for example, a network card, a modem, or a wireless communication transceiver. The communication unit 909 allows the device 900 to exchange information/data with other devices over a computer network such as the Internet and/or various telecommunication networks.

The computation unit 901 may be various general-purpose and/or dedicated processing components having processing and computing capabilities. Some examples of the computation unit 901 include, but are not limited to, central processing unit (CPU), graphics processing unit (GPU), various dedicated artificial intelligence (AI) computing chips, various computation units running machine learning model algorithms, digital signal processors (DSP), and any appropriate processors, controllers, microcontrollers, etc. The computation unit 901 performs the various methods and processes described above, such as the method for transcribing audio. For example, in some embodiments, the method for transcribing audio may be implemented as a computer software program, which is tangibly included in a machine readable medium, such as the storage unit 908. In some embodiments, part or all of the computer program may be loaded and/or installed on the device 900 via the ROM 902 and/or the communication unit 909. When the computer program is loaded into the RAM 903 and executed by the computation unit 901, one or more steps of the method for transcribing audio may be performed. Alternatively, in other embodiments, the computation unit 901 may be configured to perform the method for transcribing audio by any other appropriate means (for example, by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, specific-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for transcribing audio, the method comprising:
receiving (201) audio information uploaded through a scenario entry of a storage service application installed on a client;
determining (202), based on the scenario entry, a scenario type of the audio information;
performing (203) speech recognition on the audio information to obtain text information corresponding to the audio information; and
inputting (204) the text information and a prompt corresponding to the scenario type into a language model to obtain summary information, wherein the language model is obtained by performing supervised fine-tuning on a pre-trained model using samples corresponding to various scenario types, and the prompts corresponding to the various scenario types are obtained by tuning initial prompts corresponding to the various scenario types using the language model.

2. The method according to claim 1, wherein the scenario type comprises at least one of: classroom recording, telephone recording, or interview recording.

3. The method according to claim 2, wherein the scenario type is the classroom recording; and
the inputting (204) the text information and a prompt corresponding to the scenario type into a language model to obtain summary information, comprises:
categorizing the text information based on the prompt corresponding to the classroom recording to obtain a category of the text information; and
summarizing the text information according to the category using the language model to obtain the summary information.

4. The method according to claim 3, wherein the category comprises at least one of: a language learning category, a test-taking learning category, or a pan-learning category.

5. The method according to claim 2, wherein the scenario type is the telephone recording or the interview recording; and
the inputting (204) the text information and a prompt corresponding to the scenario type into a language model to obtain summary information, comprises:
abstracting the text information into dialogue text information based on the prompt corresponding to the telephone recording or the interview recording; and
summarizing the dialogue text information using the language model to obtain the summary information.

6. The method according to any one of claims 1-5, wherein the scenario entry comprises a scenario import entry, for uploading the audio information locally stored on the client, and/or wherein the scenario entry comprises a scenario recording entry, for uploading the audio information recorded in real time by the client, and the audio information is deleted from the client upon completion of the uploading.

7. The method according to any one of claims 1 to 6, wherein the method further comprises:
receiving a batch processing instruction based on the scenario type sent by a storage service application installed on the client; and
processing historical uploaded audio information corresponding to the scenario type, based on the batch processing instruction, wherein the processing comprises at least one of: filtering the audio information, editing the audio information, exporting the text information corresponding to the audio information, or exporting the summary information corresponding to the audio information.

8. A method for training a language model, the method comprising:
acquiring (101) a first sample corresponding to a scenario type, wherein the first sample comprises first sample text information and first sample summary information;
inputting (102) the first sample text information into a pre-trained model to obtain first prediction summary information;
calculating (103) a first loss based on the first sample summary information and the first prediction summary information; and
adjusting (104) parameters of the pre-trained model based on the first loss to obtain the language model.

9. The method according to claim 8, wherein the method further comprises:
acquiring a second sample corresponding to the scenario type, wherein the second sample comprises second sample text information and second sample summary information;
inputting the second sample text information into the language model to obtain second prediction summary information;
calculating an accuracy of the language model, based on the second sample
summary information and the second prediction summary information; and determining, in response to the accuracy of the language model being not less than a
preset accuracy threshold, that the language model passes a test, wherein the method preferably further comprises:
calculating a second loss, in response to the accuracy of the language model being less than the preset accuracy threshold, based on the second sample summary information and the second prediction summary information; and
adjusting parameters of the language model based on the second loss.

10. The method according to claim 8 or 9, wherein the method further comprises:
acquiring an initial prompt and a third sample corresponding to the scenario type, wherein the third sample comprises third sample text information and third sample summary information;
inputting the third sample text information and the initial prompt into the language model to obtain third prediction summary information; and
tuning the initial prompt based on a difference between the third sample summary information and the third prediction summary information, to obtain a prompt corresponding to the scenario type, or wherein the scenario type comprises at least one of: classroom recording, telephone recording, or interview recording.

11. An apparatus for transcribing audio, the apparatus comprising:
an audio receiving module (801), configured to receive audio information uploaded through a scenario entry of a storage service application installed on a client;
a scenario determination module (802), configured to determine, based on the scenario entry, a scenario type of the audio information;
a speech recognition module (803), configured to perform speech recognition on the audio information to obtain text information corresponding to the audio information; and
a text summarization module (804), configured to input the text information and a prompt corresponding to the scenario type into a language model to obtain summary information, wherein the language model is obtained by performing supervised fine-tuning on a pre-trained model using samples corresponding to various scenario types, and the prompts corresponding to the various scenario types are obtained by tuning initial prompts corresponding to the various scenario types using the language model.

12. An apparatus for training a language model, the apparatus comprising:
a first acquisition module (701), configured to acquire a first sample corresponding to a scenario type, wherein the first sample comprises first sample text information and first sample summary information;
a first prediction module (702), configured to input the first sample text information into a pre-trained model to obtain first prediction summary information;
a first calculation module (703), configured to calculate a first loss based on the first sample summary information and the first prediction summary information; and
a first adjustment module (704), configured to adjust parameters of the pre-trained model based on the first loss to obtain the language model.

13. An electronic device, comprising:
at least one processor; and
a memory communicatively connected to the at least one processor; wherein,
the memory stores instructions executable by the at least one processor, and the instructions, when executed by the at least one processor, cause the at least one processor to perform the method according to any one of claims 1 to 10.

14. A non-transitory computer readable storage medium storing computer instructions, wherein the computer instructions are used to cause a computer to perform the method according to any one of claims 1 to 10.

15. A computer program product, comprising a computer program, the computer program, when executed by a processor, implementing the method according to any one of claims 1 to 10.
